**Europäisches Patentamt**

**European Patent Office**

**Office européen des brevets**

(19)

(11) Veröffentlichungsnummer: **0 183 766**
**B1**

(12) **EUROPÄISCHE PATENTSCHRIFT**

(45) Veröffentlichungstag der Patentschrift:
04.11.87

(51) Int. Cl.⁴: **B 60 H 3/00**

(21) Anmeldenummer: **85902623.9**

(22) Anmeldetag: **21.05.85**

(86) Internationale Anmeldenummer:
**PCT/HU 85/00031**

(87) Internationale Veröffentlichungsnummer:
**WO 85/05598 (19.12.85 Gazette 85/27)**

(54) **KRAFTFAHRZEUGIONISATOR.**

(30) Priorität: **30.05.84 HU 210684**

(43) Veröffentlichungstag der Anmeldung:
**11.06.86 Patentblatt 86/24**

(45) Bekanntmachung des Hinweises auf die Patenterteilung:
**04.11.87 Patentblatt 87/45**

(84) Benannte Vertragsstaaten:
**BE DE FR GB IT NL**

(56) Entgegenhaltungen:
**DE-A-2 918 719**

(73) Patentinhaber: **Medicor Müvek, Röntgen u. 11- 13, H-1389 Budapest XIII (HU)**

(72) Erfinder: **HIROS, László, Lavotta utca 9, H-1104 Budapest (HU)**
Erfinder: **LIPSCHER, Ervin, Bimbó utca 70, H-1022 Budapest (HU)**
Erfinder: **BANATI, Gábor, Szilárd utca 71, H-1174 Budapest (HU)**

(74) Vertreter: **Patentanwälte Viering & Jentschura, Steinsdorfstrasse 6, D-8000 München 22 (DE)**

EP 0 183 766 B1

## Beschreibung

Die Erfindung betrifft einen Kraftfahrzeugionisator, der einen im Innenraum des Kraftfahrzeuges fixierberen Körper und mit diesem verbundene Ionisatorarmaturen aufweist.

In Kraftfahrzeugen verwendet man, um das allgemeine Wohlbefinden der Reisenden zu verbessern und der einschläfernden Wirkung längerer Autofahrten vorzubeugen, häufig Ionisatoren, die von der Gleichstromquelle des Kraftfahrzeuges mit Strom versorgt werden. Die Autoionisatoren werden üblicherweise an dem Karosseriestück neben der Windschutzscheibe, bei manchen Typen auch auf dem Armaturenbrett anmontiert. Die Montage der Kraftfahrzeugionisatoren an den erwähnten Stellen wird nur selten fachgerecht ausgeführt, und der Ionisator bildet eine Sichtbehinderung für den Fahrer.

Eine Art der Anbringung, die für den Fahrer eine zureichende Ionenkonzentration gewährleistet, ist im allgemeinen nicht geeignet, für die Mitreisenden den Raum entsprechend zu ionisieren, d.h. derartige Autoionisatoren sind praktisch nur für eine Person komfortabel. Die die negativen Ionen herstellende Ionisatorarmatur ist im allgemeinen starr mit dem die zur Erzeugung der Hochspannung erforderlichen Stromkreise enthaltenden Ionisatorkörper verbunden, und daraus ergibt sich, daß ein einstellbar gerichtetes Ionenfeld nicht erzeugt werden kann.

Aufgabe der Erfindung ist die Schaffung eines Kraftfahrzeugionisators, der sowohl für den Fahrer wie auch die neben dem Fahrer sitzende Person eine wirksame und einstellbare ionisierende Wirkung gewährleistet, und dessen Montage kein Fachwissen erfordert.

Diese Aufgabe wurde im Sinne der Erfindung dadurch gelöst, daß der Ionisatorkörper eine flache, längliche Form aufweist, die gut hinter den inneren Rückspiegel paßt. An diesem Körper ist an beiden Seiten je eine Ionisatorarmatur mit gelenkiger Verbindung angebracht. Bei der Herstellung der gelenkigen Verbindung wird eine zur Frontplatte des Körpers schräge Schwenkachse gewählt, und infolgedessen kann die Strahlungsrichtung innerhalb eines günstigen Winkelbereiches variiert werden.

Zur Befestigung am inneren Rückspiegel sind mehrere mit dem Körper verbundene Organe, zweckmäßig mit Schrauben fixierbare, hervorstehende Aufhängekrallen, und zur oberen Befestigung über einen elastischen Gurt mit dem Körper verbundene Aufhängekrallen vorgesehen.

Zwecke geeigneter Formanpassung an die Rückseite des Rückspiegels ist in der Mitte des Körpers an der Ober- und Unterseite je eine Öffnung (ein Ausschnitt) angebracht, die die der Befestigung des Spiegels dienenden Elemente aufnimmt.

Damit die Ionisatorarmaturen wenig Sicht verdecken und einfach einstellbar sind, ist es zweckmäßig, sie als flache, sich nach außen hin verjüngende, an der Stirnseite mit einem Spalt versehene Körper mit bezogen auf die Stirnseite in einem spitzen Winkel nach hinten stehendem Schaft zu konstruieren. Aus dem Schaft steht in seitlicher Richtung das einen Teil der Gelenkverbindung bildende Befestigungsstück hervor, dessen Achse senkrecht auf der Seiterfläche dee Schaftes steht.

Im Interesse einer guten Raumausnutzung ist es vorteilhaft, wenn im Bereich der beiden unteren Ecken des Körpers eckige Aussparungen zur Aufnahme der Schafte der Ionisatorarmaturen vorgesehen sind. Die eine Seiterfläche der Aussparung schließt mit der Frontplatte einen spitzen Winkel ein und enthält in ihrem Inneren ein den zweiten Teil der Gelenkverbindung bildendes Nest, dessen Achse auf der Seitenfläche senkrecht steht.

Der erfindungsgemäße Kraftfahrzeugionisator ist leicht hinter den inneren Rückspiegel des Kraftfahrzeuges montierbar, mit den beiden verstellbaren Ionisatorarmaturen können Fahrer und Fahrgast getrennt voneinander die für ihr Befinden optimale Richtung des Ionenstromes einstellen, und die flachen Ionisatorarmaturen verdecken die Aussicht praktisch nicht.

Der erfindungsgemäße Kraftfahrzeugionisator wird im folgenden an Hand eines Ausführungsbeispieles mit Hilfe der Zeichnungen näher erläutert.

Fig. 1 zeigt den erfindungsgemäßen Kraftfehrzeugionisator perspektivisch von vorn,

Fig. 2 stellt den Innenraum des Kraftfahrzeuges mit dem an den Rückspiegel montierten Ionisator in der Draufsicht dar,

Fig. 3 veranschaulicht den erfindungsgemäßen Kraftfahrzeugionisator vergrößert und in Seitenansicht, und in

Fig. 4 ist die Verbindung zwischen Ionisatorarmatur und Körper schematisch, zum Teil im Schnitt gezeigt.

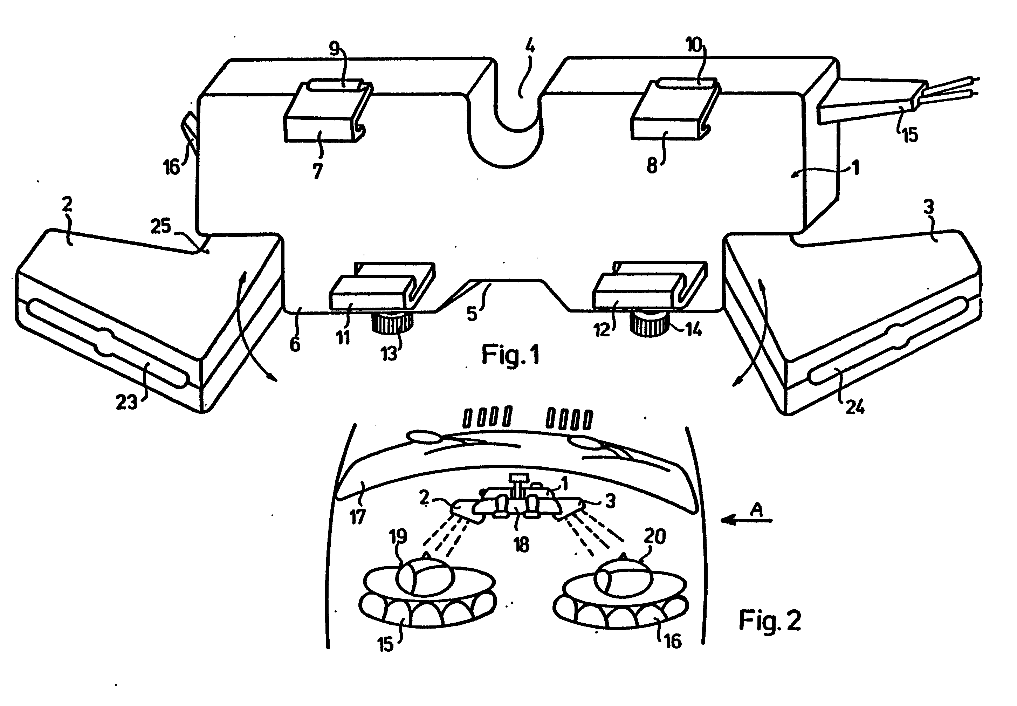

In Fig. 1 ist die perspektivische Ansicht des erfindungsgemäßen Kraftfahrzeugionisators dargestellt. Daraus ist ersichtlich, daß der Kraftfahrzeugionisator aus drei Hauptteilen, nämlich einem Körper 1 und zwei mit diesem verbundenen, spiegelsymmetrisch ausgebildeten Ionisatorarmaturen 2 und 3 besteht. Der Korper 1 ist flach und von symmetrischer Form, in seinem Mittelbereich ist oben und unten je eine Öffnung 4 beziehungsweise 5 vorgesehen. Aus einer Vorderplatte 6 des Körpers 1 stehen oben Aufhängekrallen 7 und 8 heraus, die über elastische Gurte 9, 10 im Inneren des Körpers 1 befestigt sind. Unten sind ebenfalls Aufhängekrallen 11 und 12 vorhanden, deren flache Enden senkrecht zur Frontplatte 6 in den Körper 1 hineinregen; ihre Lage ist mittels Schrauben 13, 14 fixierbar.

Über einen Anschluß 15 an der rechten Seite des Körpers 1 kann eine Speisespannung angeschlossen werden, und an der linken Seite ist ein Schalter 16 angebracht, mit dem der Ionisator aus- und eingeschaltet werden kann.

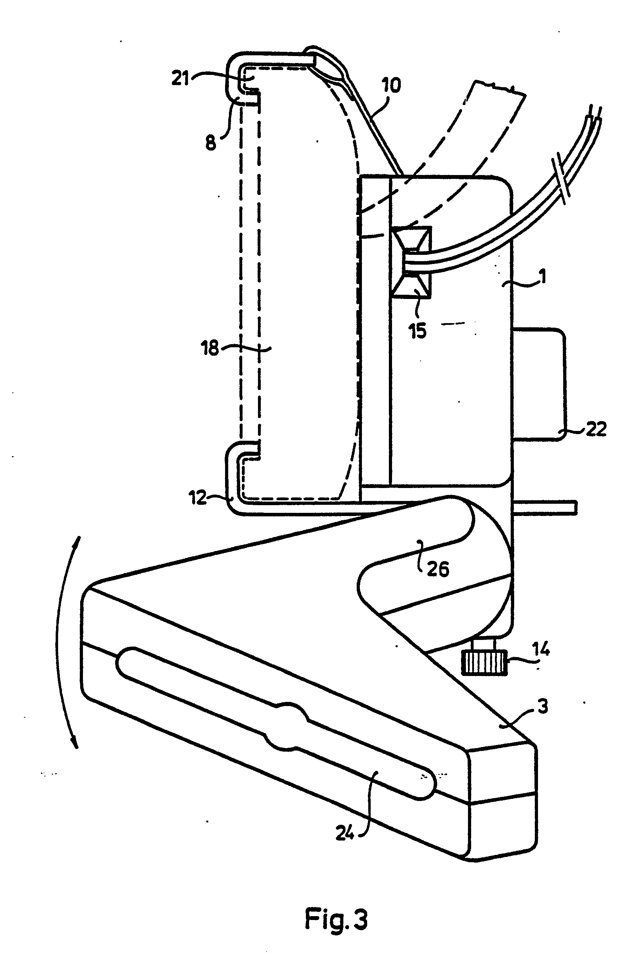

Bestimmungsgemäß wird der erfindungsgemäße Kraftfahrzeugionisator an den inneren Rückspiegel des Kraftfahrzeuges montiert. Fig. 2 zeigt ein schematisches Bild des Wageninneren von oben gesehen, in dem rechter und linker Sitz 15 und 16, Windschutzscheibe 17 und Rückspiegel 18 dargestallt sind. Der Körper 1 ist an den Rückspiegel 18 anmontiert, und nur die Ionisatorarmaturen 2 und 3 stehen über die Ebene des Spiegels hinaus und können vom Fahrer 19 und Fahrgast 20 nach Belieben eingestellt werden.

In Fig. 3 ist ein aus der Richtung des Pfeiles A in Fig. 2 projiziertes vergrößertes Bild gezeigt, das die Befestigung des Ionisators am inneren Rückspiegel 18 zeigt, der bei den meisten Kraftfahrzeugtypen mit einem umlaufenden Rahmen 21 versehen ist. Mit den Schrauben 13 und 14 kann die herausstehende Länge der Aufhängekrallen 11 und 12 so eingestellt werden, daß die Krallen den Rahmen 21 umfassen. Dies verleiht dem Ionisator gleichzeitig eine starre Unterstützung. Die oberen Aufhängekrallen 7, 8 sind mit Hilfe der Gurte 9, 10 an dem oberen Rahmen 21 aufgehängt, die Straffheit wird durch die elastische Zugkraft der Gurte 9, 10 gewährleistet. Das mittlere Befestigungselement des Rückspiegels paßt in die Öffnung 4, während ein eventueller unterer, mittiger Vorsprung von der Öffnung 5 aufgenommen wird. Eine an der Rückseite des Körpers 1 sichtbare, zylinderformige Erhebung 22 gewährleistet die Unterbringung des Hochspannungstransformators. Dieser Zylinder ist von den Sitzen aus nicht zu sehen. Der innere Rückspiegel 18 verdeckt mit Ausnahme der Ionisatorarmaturen 2 und 3 den Ionisator völlig.

Die Form der Ionisatorarmaturen 2 und 3 ist in den Zeichnungen gut zu sehen: sie sind flach ausgebildet, haben eine mit je einem Spalt 23 beziehungsweise 24 versehene Stirnflache, je einen eine mit dieser einen spitzen Winkel einschließende Fläche aufweisenden Schaft 25 beziehungsweise 26 und eine schräg auf die Stirnfläche zu verlaufende Rückseite.

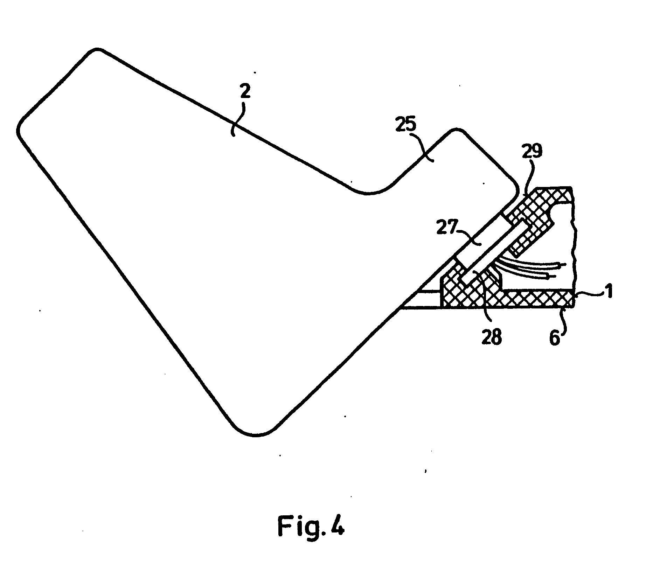

In Fig. 4 ist die gelenkige Verbindung zwischen dem Körper 1 und der Ionisatorarmatur 2 gezeigt. Aus dem Schaft 25 der Ionisatorarmatur 2 ragt, bezogen auf diese mit senkrechter Achse, ein Befestigungsstück 27 das genau in ein entsprechend geformtes Nest 28 des Körpers 1 paßt. Eine Seitenfläche 29 des Körpers 1 schließt mit der Frontplatte 6 im Bereich des Nestes 28 einen spitzen Winkel ein. Auf diese Weise ist die Ionisatorarmatur 2 über die erläuterte Gelenkverbindung bezogen auf den Körper 1 um die erwähnte Achse schwenkbar. Die Schwenkbarkeit ist in Fig. 1 durch Pfeile angedeutet.

Der Körper 1 wird zweckmäßig aus zwei Teilen gefertigt. In diesem Falle hindert die schräge Seitenfläche 29 die Einführung des Befestigungsstückes 27. Das Befestigungsstück 27 kann nur in einer ganz bestimmten Winkelstellung der Ionisatorarmatur 2 eingesetzt werden. Das einmal eingesetzte Verbindungsstück 27 hält die beiden Teile des Körpers 1 zusammen.

Durch das Innere des Befestigungsstückes 27 führt eine Bohrung für die Leitungen, die die im Körper 1 befindliche Schaltung mit der Ionisatorarmatur 2 verbinden.

In der Ionisatorarmatur 2 ist die ionisierende Nadelelektrode hinter dem mittleren Teil des Spaltes 23 angeordnet. Die Schwenkbarkeit der Ionisatorarmaturen 2 und 3 des an den Spiegel montierten Ionisators ermöglicht es, für den Kraftfahrer 19 und den Fahrgast 20 getrennt voneinander die günstigste Einstrahlungsrichtung zu wählen. Außer dieser sehr wertvollen Möglichkeit ist noch von Vorteil, daß der erfindungsgemäße Kraftfahrzeugionisator sehr günstig montierbar ist und die Sicht nicht behindert.

**Patentansprüche**

1. Kraftfahrzeugionisator, der einen im Innenraum des Kraftfahrzeuges fixierbaren Körper (1) und mit diesem verbundene Ionisatorarmaturen (2, 3) aufweist, dadurch gekennzeichnet, daß er einen flachen, länglichen Körper (1) hat, an dessen beiden Seiten mit gelenkiger Verbindung (25, 26) je eine Ionisatorarmatur (2, 3) angebracht ist, die Ionisatorarmaturen (2, 3) spiegelsymmetrisch ausgebildet sind, die gelenkige Verbindung bezogen auf die Frontplatte (6) des Körpers (1) eine schräge Achse hat und der Körper (1) über Fixierungsorgane (7, 8; 11, 12) verfügt.

2. Kraftfahrzeugionisator nach Anspruch 1, dadurch gekennzeichnet, daß im mittleren Bereich des Körpers (1) wenigstens an einer Seite eine Öffnung (4, 5) ausgebildet ist.

3. Kraftfahrzeugionisator nach Anspruch 1 oder 2, dadurch gekennzeichnet, daß die Ionisatorarmaturen (2, 3) als flache, sich nach außen verjüngende, an der Stirnseite mit einem Spalt (23, 24) versehene Körper mit bezogen auf die Stirnseite in einem spitzen Winkel nach hinten stehendem Schaft (25, 26) ausgebildet sind und aus dem Schaft (25, 26) in seitlicher Richtung ein einen Teil der gelenkigen Verbindung bildendes Befestigungsstück (27) heraussteht, dessen Achse senkrecht auf der Seitenfläche des Schaftes steht.

4. Kraftfahrzeugionisator nach Anspruch 3, dadurch gekennzeichnet, daß im Bereich der beiden unteren Ecken des Körpers (1) eckige Aussparungen zur Aufnahme der Schäfte (25, 26) der Ionisatorarmaturen (2, 3) vorgesehen sind und die eine Seitenfläche (29) der Aussparung mit der Frontplatte (6) einen spitzen Winkel einschließt und in ihrem Inneren ein den zweiten Teil der Gelenkverbindung bildendes Nest (28) enthält, dessen Achse auf der Seitenfläche (29) senkrecht steht.

5. Kraftfahrzeugionisator nach einem der Ansprüche 1-4, dadurch gekennzeichnet, daß die Fixierungsorgane von aus des unteren Teil des Körpers (1) zur Frontplatte (6) senkrecht herausstehenden Aufhängekrallen (11, 12) von mittels Schrauben (13, 14) einstellbarer freier Länge, ferner von aus dem oberen Teil des Körpers herausragenden, an dessen Innerem mittels elastischer Gurte (9, 10) befestigten Aufhängekrallen (7, 8) gebildet werden.

## Claims

1. Ionisator of automobiles, comprising a body (1) fixable within the inside of the auto-mobile and ionisation armatures (2, 3) connected to said body (1), characterised in that it has a flat, oblong body (1), to each of the two sides of said body (1) is mounted an ionisation armature (2, 3) via a flexible connection (25, 26), the ionisation armature (2, 3) is developed specular symmetrically, the flexible connection has an oblique axis relative to the front plate (6) of the body (1) and the body (1) is endowed with fixing elements (7, 8; 11, 12).

2. Ionisator according to claim 1, characterised in that an opening (4, 5) is developed at least at one side in the central area of the body (1).

3. Ionisator according to claim 1 or 2, characterised in that the ionisation armatures (2, 3) are developed as flat bodies tapering to the outer ends, endowed with apertures (23, 24) at the front face and have a shaft (25, 26) projecting backwards in an acute angle relative to the front face, and that from the shaft (25, 26) there is prominent in a lateral direction a fixing part (27) being part of the flexible connecton, the axis of said fixing part being perpendicular to the lateral face of the shaft.

4. Ionisator according to claim 3, characterised in that in the area of the two lower corners of the body (1) there are provided cornered recesses for the incorporation of the shafts (25, 26) of the ionisation armatures (2, 3) a lateral face (29) of the recess formes an acute angle with the front plate (6), and the lateral face contains in the inside a nest (28) forming the second part of the flexible connecton, the axis of said nest being perpendicular to the lateral face (29).

5. Ionisator according to one of claims 1 to 4, characterised in that the fixing elements are formed of suspension claws (11, 12) the free length of said claws being adjustable by means of screws (13, 14) said suspension claws (11, 12) projecting from the lower part of the body (1) and being perpendicular to the front plate (6) said fixing elements further being formed of suspension claws (7, 8) protecting from the upper part of the body and being fixed to the inner part of the body via resilient straps (9, 10).

## Revendications

1. Ionisateur d'automobile avec un corps (1) fixable dans l'interieur de l'automobile et avec des armatures d'ionisation (2, 3) reliées avec ce corps, caractérisé en ce-qu'il a un corps (1) plat et allongé, à chaque des deux côtés duquel soyant installée une armature d'ionisaton (2, 3) avec une jonction (25, 26) flexible que les armatures d'ionisation (2, 3) sont developées symetriques, que la jonction flexible a une axe oblique en relation avec la planche frontale (6) du corps (1) et que le corps (1) est muni des organes (7, 8; 11, 12) de fixation.

2. Ionisateur d'automobile suivant la revendicaton 1, caractérisé en ce qu'une ouverture (4, 5) est developée dans la région centrale du corps (1) au moins à une côté.

3. Ionisateur d'automobile suivant la revendication 1 ou 2, caractérisé en ce que les armatures d'ionisation (2, 3) sont développées comme des corps plats se retrécissants à l'extérieur, munis au front d'une fente (23, 24) et sont dévelopées avec une manche (25, 26) écarté d'un angle aigu en rapport du front, et qu'un élément de fixation (27) formant une partie de la jonction flexible sort de la manche (25, 26) en directon collatérale l'axe duquel element est perpendiculaire à la face latérale de la manche.

4. Ionisateur d'automobile suivant la revendication 3, caractérisé en ce que dans la région des deux coins vers le bas du corps (1), ils sont prevu des ménagements anguleux pour la réception des mentes (25, 26) des armatures d'ionisation (2, 3) et que l'une des faces latérales (29) du ménagement forme un angle aigu avec la planche frontale (6) et que la face latérale (29) contient à l'interieur un nid (28) formant la deuxième partie de la jonction flexible, l'axe du nid étant perpendiculaire à la face latérale (29).

5. Ionisateur d'automobile suivant une des revendications 1 à 4, caractérisé en ce que les éléments de fixaton sont formés des griffes de suspension (11, 12), la longeur dégagée desquelles est ajustable en moyen de vis (13, 14), les griffes de suspension sortants de la partie vers le bas du corps (1) et perpendiculaire à la planche frontale (6), et que les éléments de fixation sont formés aussi de griffes de suspension (7, 8) sortants de la partie vers le haut du corps accroché à son intérieur en moyen de bandes élastiques (9, 10).

Fig. 1

Fig. 2

0 183 766

Fig. 3

**Fig. 4**